# EUROPÄISCHE PATENTSCHRIFT

(11) **EP 1 119 264 B1**
(45) Veröffentlichungstag und Bekanntmachung des Hinweises auf die Patenterteilung: **30.03.2005**
(21) Anmeldenummer: 99969651.1
(22) Anmeldetag: 28.09.1999
(51) Int. Cl.: A23K 1/00, A23K 1/18

(54) **STÜCKIGES PRODUKT IN TIERNAHRUNGSMITTELZUSAMMENSETZUNGEN SOWIE EIN VERFAHREN ZUR HERSTELLUNG DESSELBEN**
CHUNKY PRODUCT USED IN ANIMAL FOOD COMPOSITIONS AND PROCESS FOR PRODUCING THE SAME
PRODUIT EN MORCEAUX UTILISE DANS DES COMPOSITIONS D'ALIMENTS POUR ANIMAUX ET PROCEDE DE PRODUCTION CORRESPONDANT

(30) Priorität: 28.09.1998 DE 19844393
(43) Veröffentlichungstag der Anmeldung: 01.08.2001
(73) Patentinhaber: Mars, Inc., McLean, VA 22101-3883 (US)
(72) Erfinder: SCHLEBUSCH, Johannes, D-28209 Bremen (DE); SCHMIDT, Siegfried, D-27283 Verden/Aller (DE); WAIGAND, Siegfried, D-27283 Verden/Aller (DE); HEMUS, John, D-27283 Verden/Aller (DE)
(74) Vertreter: Goddar, Heinz J., Dr.
(86) Internationale Anmeldenummer: PCT/DE1999/003125
(87) Internationale Veröffentlichungsnummer: WO 2000/018252

(56) Entgegenhaltungen:
- WO-A-95/16368
- WO-A-97/02760
- DE-A- 2 650 800
- US-A- 4 364 925
- US-A- 4 954 061

## Beschreibung

Die vorliegende Erfindung betrifft ein stückiges Produkt in Tiemahrungsmittelzusammensetzungen sowie ein Verfahren zur Herstellung desselben.

Obwohl es heutzutage eine Vielzahl an verschiedenen Tiemahrungsmitteln in den verschiedensten Erscheinungsformen gibt, lassen sich diese in zwei Gruppen einteilen: zum einen herkömmliches Tierfertigfutter, bestehend aus einer festen und einer flüssigen Phase, d.h. in der Regel Fleischstücke und eine die Stücke umgebende Soße; sowie Trockenfutter, in Form von speziell geformten Pellets, die als Resultat eines starken Wasserentzuges, z.B. Ausbakken, einer breiigen Paste hergestellt worden sind.

Dabei hat es sich gezeigt, daß im Falle der Tierfertignahrung, bestehend aus Fleischbrocken und Soße, die festen Bestandteile der Nahrung leicht zwischen den Zähnen des Tieres hängenbleiben und damit zu einer erheblich verschlechterten Mundhygiene beitragen. Außerdem wird wegen breiiger oder sehr weicher Konsistenz der Nahrung diese nicht gekaut, sondern geschlungen; es findet keine ausreichende Zerkleinerung der Nahrung in der Mundhöhle statt, was dazu führt, daß die Verdauung den gastrointestinalen Trakt belastet. Durch eine erhöhte Freßgeschwindigkeit und das Schlingen der Nahrung durch das Tier findet keine ausreichende Speichelbildung statt, und somit wird die Mundhöhle unzureichend von Bakterien gereinigt.

Trockenfutter muß kauintensiv mechanisch zerkleinert werden, so daß infolge des Kauens Zahnbeläge reduziert und das Zahnfleisch besser durchblutet wird. Im Vergleich zum Feuchtfutter wird das Trockenfutter jedoch nicht so gerne gefressen und kann sogar vom Tier verweigert werden.

Es hat einige Versuche gegeben, ein stückiges Tierfutter ohne die Verwendung von Fleischbrocken herzustellen. So beschreiben DE 2 728 512 A1 sowie DE 2 650 800 A1 ein Naßfutter für Haustiere, das als ein Bestandteil erhitzungsstabile, fleischähnliche Brocken auf Blutbasis enthält, und geben für diese Brocken eine Rezeptur an, die sich durch die Anwesenheit von Blutbestandteilen und Kautschuk auszeichnet. In beiden Druckschriften wird die Festigkeit der Brocken durch die Zugabe einer definierten Menge an Kautschuk bestimmt. Fakultativ kann als weitere Zutat eine zusätzliche Proteinquelle eingesetzt werden, die aus tierischem oder pflanzlichem Protein oder aus Gemischen davon bestehen kann. Die Festigkeit wird dabei jedoch allein durch die Zugabe eines geeigneten Gummis festgelegt. Dabei ist eine abgestufte Einstellung der Festigkeit und Textur des Brockens nicht möglich.

Ziel der Erfindung war es, die positiven Aspekte der zwei Tierfutterarten, d.h. den gesundheitsfördernden Aspekt des Trockenfutters mit der vergleichsweise höheren Verzehrattraktivität des Zweikomponenten-Fertigfutters zu vereinen.

WO 95/16368 beschreibt retortenstabile, extrudierte, geformte Futterstücke, die 15 Gew.% bis 65 Gew.% Protein, 15 Gew.% - 65 Gew.% Stärke, 0 Gew.% - 9 Gew.% Fett und Salze, d. h. 0 Gew.% bis 2 Gew.% Dicalciumphosphat enthalten.

Ein weiteres Ziel der Erfindung war es, ein stückiges Produkt bereitzustellen, bei dem die Textur und Festigkeit abgestuft eingestellt werden können, sowie ein Verfahren zu dessen Herstellung.

Erfindungsgemäß wird diese Aufgabe gelöst durch ein stückiges Produkt, das sich zum Beimengen in oder als alleiniger Bestandteil von Tiemahrungsmittelzusammensetzungen eignet und das Proteine, eine oder mehrere wasserbindende Komponenten, Wasser und Salz enthält, dadurch gekennzeichnet, daß es aus mindestens einer Phase besteht, in der die Proteine als Ergebnis eines geeigneten Denaturierungsschrittes eine sich durch hohe Festigkeit auszeichnende Matrix bilden, welche Prozesse wie Sterilisierung und mehrjähriges Aufbewahren ohne merkliche Festigkeitseinbußen übersteht, weiterhin dadurch gekennzeichnet, daß die Proteine aus konzentriertem Blutplasma und/oder Blutplasmapulver und/oder Ei-Albumin-Pulver und/oder Weizenkleber und/oder Sojaproteinen stammen, daß die wasserbindenden Komponenten entweder aus der Gruppe Mehl/Stärke/Wachsmaisstärke oder aus der Gruppe Kieselsäure/physiologisch unbedenkliche Metalloxide/andere nicht-toxische, inerte, wasserabsorbierende Substanzen oder aus der Gruppe Cellulose-Pulver/Pflanzenfasern oder aus einer Kombination von Substanzen der verschiedenen Gruppen stammen, und daß allein durch die Auswahl der Art und Menge der Proteine und der wasserbindenden Komponenten die Textur des stückigen Produktes festgelegt ist, wobei vorgesehen ist , daß nach der Hestellung des stückigen Produkts der Gehalt an Proteinen 10 bis 35 Gew.-%, an Mehl/Stärke/Wachsmaisstärke 15 bis 40 Gew.-% und an Kieselsäure/physiologisch unbedentlichen Metalloxiden/anderen nicht -toxischen, inerten, wasserabsorbierenden Substanze bzw. Cellulosepulver/Pfanzenfasern 5 bis 25 Gew.-% beträgt.

Es hat sich gezeigt, daß ein solches stückiges Produkt, im folgenden kurz "Chunk" genannt, eine vielfach höhere Festigkeit als herkömmliche Fleischstücke in einem Zweikomponenten-Fertigfutter aufweist, infolgedessen die Tiere dazu zwingt, die Nahrung intensiv zu kauen, was zur Reduzierung von Zahnbelägen führt, und daß ein erfindungsgemäßer Chunk von Tieren gern verzehrt wird. Gleichzeitig kann durch gezielte Auswahl der Zutaten die Textur des Chunks von spröde bis elastisch variiert und eingestellt werden, ganz nach individuellem Bedarf bzw. geplantem Einsatz des Tierfutters. Die Aufnahme von erfindungsgemäßen Chunks erfolgt durch intensives Kauen anstelle von Schlingen, sie scheint für die Tiere interessanter zu sein als der Verzehr herkömmlicher Tiernahrungsmittel.

Wichtig zum Lösen der gestellten Aufgabe ist die besondere Auswahl von funktionalen Proteinen, allein oder in Kombination mit anderen Bestandteilen auf Cereal-Basis, z. B. Weizenmehl, um die gewünschten Textureigenschaften zu erhalten. Die gewünschte Textur entsteht dadurch, daß die spezifisch ausgewählte Kombination von Proteinen koaguliert, das dabei freiwerdende Wasser von dem Weizenmehl aufgenommen wird, welches dabei verkleistert. Fakultativ kann eine weitere wasserbindende Komponente zugesetzt werden, deren Auswahl hinsichtlich Art und Menge ebenso einen maßgeblichen Einfluß auf die Textur des Chunks hat. Damit wird ein stückiges Produkt bereitgestellt, dessen Textur sich nach Bedarf einstellen läßt.

Um eine erhöhte Festigkeit der Proteinmatrix zu gewährleisten, ist insbesondere vorgesehen, daß der Fett-/Ölanteil in der festen Phase der erfindungsgemäßen Chunks unter 5 %, vorzugsweise unter 2 % liegt.

Zur Herstellung von erfindungsgemäßen Chunks ist insbesondere vorgesehen, daß das Gewichtsverhältnis der proteinhaltigen Zutaten zu den wasserbindenden Komponenten im Bereich von 2,5:1 bis 0,3:1 liegt. In einer besonderen Ausführungsform beträgt dieses Gewichtsverhältnis 2:1. In einer anderen Ausführungsform beträgt dasselbe Gewichtsverhältnis 0,48:1.

Dabei liegt nach der Herstellung vorzugsweise das Verhältnis von Proteinen zu Mehl zwischen 0,6 und 1,4, wobei der Feuchtigkeitsgehalt zwischen 35 und 65 %, der Kohlenhydratgehalt zwischen 10 und 30 % und der Fettanteil unter 5 %, vorzugsweise unter 2 % liegt.

In einer bevorzugten Ausführungsform besteht das stückige Produkt aus einer inneren und einer äußeren Phase, wobei die äußere Phase die sich durch hohe Festigkeit auszeichnende Proteinmatrix enthält und mindestens 10 x, vorzugsweise 18 x verformungsresistenter als die innere Phase ist. Dabei ist die innere Phase eine aus gekochten oder ungekochten Fleischteilen bestehende Phase.

In einer anderen bevorzugten Ausführungsform besteht das stückige Produkt aus einer inneren und einer äußeren Phase, wobei die innere Phase die sich durch hohe Festigkeit auszeichnende Proteinmatrix enthält und mindestens 10 x, vorzugsweise 18 x verformungsresistenter als die äußere Phase ist, welche eine Emulsion oder ein Gel ist oder eine weiche, leicht verformbare Konsistenz hat.

Es ist zu betonen, daß die Beschränkung der Beschreibung auf aus lediglich zwei Phasen bestehenden Chunks nicht als Einschränkung verstanden werden soll. Vielmehr sind erfindungsgemäß auch Chunks mit 3, 4 oder mehreren Phasen denkbar, die sich in ihrer Festigkeit unterscheiden.

Erfindungsgemäß ist ebenso ein Verfahren zur Herstellung eines stückigen Produktes vorgesehen, bei dem zur Herstellung der sich durch hohe Festigkeit auszeichnenden Phase die Proteine in Wasser gelöst werden, sodann wasserbindende Substanzen in die Proteinlösung dispergiert werden, sodann die Viskosität der so erhaltenen Suspension durch geeignete Zugabe quellfähiger oder wasserabsorbierender Substanzen eingestellt wird, die so erhaltene Phase zu Strängen einer definierten Größe ausgeformt wird, die so erhaltenen Stränge einem Denaturierungsschritt unterworfen und dann auf eine geeignete Größe geschnitten und allein oder eventuell mit anderen Komponenten verpackt und sterilisiert werden, und weiterhin dadurch gekennzeichnet, daß die Textur des stückigen Produktes allein durch die Auswahl der Art und Menge der Proteine und der wasserbindenden Komponente festgelegt wird. Dabei werden die Proteine bevorzugt unter Salzzugabe in Wasser gelöst. Erfindungsgemäß ist außerdem bevorzugt vorgesehen, daß die wasserbindenden Substanzen, welche in die Protein-/Salzlösung dispergiert werden, der Gruppe Mehl/Stärke/Wachsmaisstärke angehören.

Dabei wird zum Einstellen der Viskosität der Suspension bevorzugt eine oder mehrere Substanzen der Gruppe Mehl/Kieselsäure/physiologisch unbedenkliche Metalloxide/andere nichttoxische, inerte, wasserabsorbierende Substanzen/Cellulosepulver/Pflanzenfasern verwendet.

In einer bevorzugten Ausführungsform der Erfindung haben die ausgeformten Stränge einen mittleren Durchmesser von 10 mm bis 35 mm.

Für das erfindungsgemäße Verfahren ist insbesondere bevorzugt vorgesehen, daß der Denaturierungsschritt eine Temperaturänderung oder eine Änderung des pH-Wertes beinhaltet. In einer besonderen Ausführungsform der Erfindung wird zur Durchführung des Denaturierungsschrittes die Temperatur auf mindestens 85°C erhöht.

Bevorzugt weisen die nach dem Schneideschritt erhaltenen Stücke eine zum Verzehr geeignete Größe auf.

Nunmehr wird die Erfindung anhand der folgenden Beispiele und Abbildungen näher beschrieben.

Dabei zeigt:
Abbildung 1 einen Querschnitt durch eine Düse zur Herstellung eines aus zwei Phasen bestehenden Chunks sowie die schematische Darstellung eines aus zwei Phasen bestehenden Chunks nach der Herstellung;
Abbildung 2 die Darstellung der zum Aufbrechen der beiden Phasen benötigten Kraft in einem aus zwei Phasen bestehenden Chunk.

### Beispiel 1:

### Rezepturen und Analyseergebnisse der festen Phase eines erfindungsgemäßen Chunks

Um den Einfluß verschiedener Zutaten auf die Beißkonsistenz und -textur zu bestimmen, wurde mit verschiedenen Rezepturzusammensetzungen gemäß Tabelle 1 experimentiert. Es hat sich gezeigt, daß insbesondere die Abwesenheit von Kieselsäure bzw. die Anwesenheit von Weizenkleber oder Cellulosepulver bewirkt, daß der so-hergestellte Chunk eine elastische Konsistenz aufweist. Dabei unterscheiden sich die mit Kieselsäure hergestellten, spröden Chunks nur geringfügig in der Analyse von den ohne Kieselsäure hergestellten elastischen Chunks, wie aus Tabelle 2 hervorgeht. Elastischer Chunk Nr. 3 weist sogar den geringsten Feuchtigkeitsgehalt auf.

**Tabelle 1:**

| Rezepturen für die feste Phase eines erfindungsgemäßen Chunks (Angaben in Gew.-%) | | | | | |
|---|---|---|---|---|---|
| Rezepturnr.: | 1 | 2 | 3 | 4 | 5 |
| Kieselsäure | 10,5 | 13 | --- | 11 | --- |
| Blutplasma konz. | 67 | --- | --- | --- | --- |
| Eiweißpulver | --- | 18 | 26 | 17,5 | 17,5 |
| Weizenmehl | 22 | 25 | 25 | 25 | 25 |
| Weizenkleber | --- | --- | 8,5 | --- | --- |
| Cellulose-pulver | --- | --- | --- | --- | 11 |
| Salz | 0,5 | 0,5 | 0,5 | 0,5 | 0,5 |
| Wasser | | 43,5 | 40 | 46 | 46 |
| Gesamt | 100 | 100 | 100 | 100 | 100 |
| Textur | spröde | spröde | elastisch | spröde | elastisch |

**Tabelle 2:**

| Analyseergebnisse der nach Tabelle 1 hergestellten Chunks (Angaben in Gew.-%) | | | | | |
|---|---|---|---|---|---|
| Produkt | 1 | 2 | 3 | 4 | 5 |
| Feuchtigkeit | 54 | 48 | 45 | 50 | 50 |
| Protein | 15 | 18 | 32 | 18 | 18 |
| Fett | 0,6 | 0,8 | 1,3 | 0,8 | 0,8 |
| Kohlenhydrate | 14 | 17 | 17 | 17 | 17 |

### Beispiel 2:

### Herstellung eines sich durch spröde Eigenschaften auszeichnenden Chunks

Die gemischten, trockenen Rezepturkomponenten von Rezeptur 1 werden kontinuierlich in einem geeigneten Mischer dosiert und dort mit der entsprechenden Menge Wasser vermischt. Die viskose Phase wird über Düsen auf einem Dampftunnel zu Strängen geformt und ausgebacken. Die Stücke werden geschnitten und in Dosen sterilisiert.

### Beispiel 3:

### Herstellung eines sich durch elastische Eigenschaften auszeichnenden Chunks

Die gemischten, trockenen Rezepturkomponenten von Rezeptur 3 werden kontinuierlich in einem Doppelwellenmischer dosiert und dort mit der entsprechenden Menge Wasser vermischt. Die viskose Phase wird über Düsen auf einem Dampftunnel zu Strängen geformt und ausgebacken. Die Stücke werden geschnitten und in Dosen sterilisiert.

### Beispiel 4:

### Herstellung eines aus zwei Phasen bestehenden Chunks mit einer äußeren festen und einer inneren weichen Phase

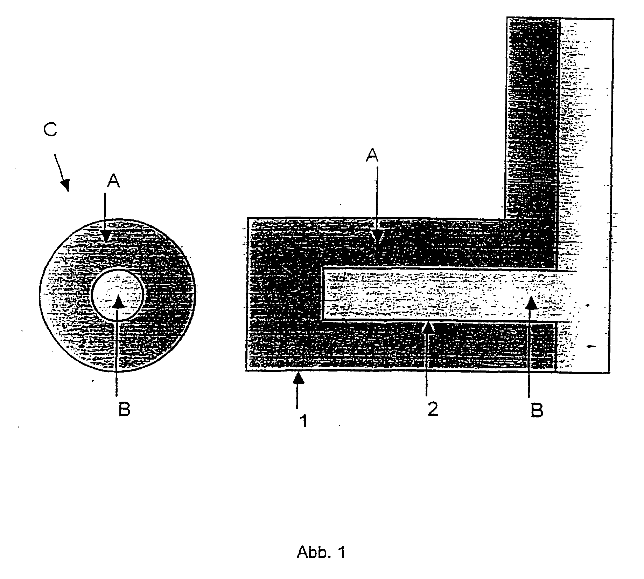

Die Zutaten der Rezeptur 3 werden auf die folgende Art gemischt: Zunächst wird in einem Kutter das Eiweißpulver unter Salzzugabe gelöst und dann das Weizenmehl und der Weizenkleber in die Suspension eingearbeitet. Die erhaltene Phase A wird in das äußere Rohr 1 einer Düse gepumpt, die aus zwei konzentrisch angeordneten Rohren unterschiedlicher Durchmesser (28 mm, 16 mm) aufgebaut ist (siehe auch Abbildung 1). Durch das innere Rohr 2 wird eine konventionelle, d.h. aus gekochten Fleischstücken bestehende Phase B gepumpt. Der konzentrische Doppelstrang wird in einem Dampftunnel gebacken und nachfolgend geschnitten. Die so erhaltenen Chunks C sehen Markknochen sehr ähnlich und weisen auch eine sehr feste Textur der äußeren Hülle und einen weichen Kern auf.

### Beispiel 5:

### Analyseergebnisse eines aus zwei Phasen bestehenden Chunks nach Sterilisierung

Die gemäß Beispiel 4 hergestellten Chunks wurden phasenspezifisch analysiert, und es ergaben sich dabei die in Tabelle 3 zusammengefaßten Resultate:

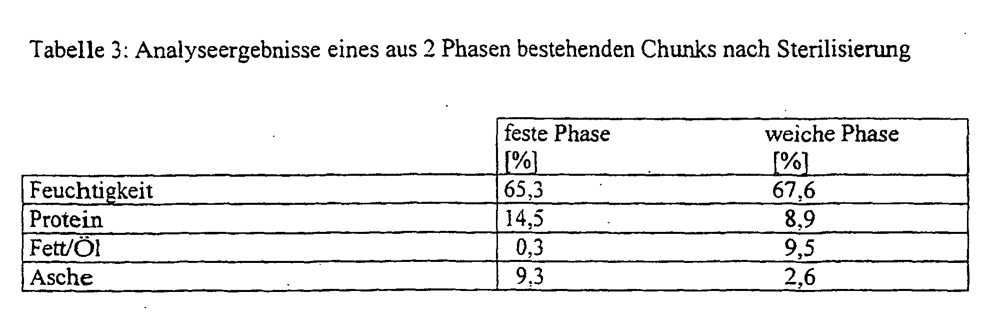

Abbildung 1 zeigt einen Querschnitt durch eine Düse zur Herstellung eines aus zwei Phasen bestehenden Chunks. Dabei ist ein äußeres Rohr 1 sowie ein inneres Rohr 2 mit unterschiedlichen Durchmessern konzentrisch angeordnet, und durch das äußere Rohr bzw. innere Rohr werden zwei verschiedene Phasen A und B gepumpt. Hieraus resultiert ein in Annäherung tubulärer Strang, bestehend aus einer Kem- und einer Umhüllungsphase. Der so erhaltene Strang wird durch Hitzeeinwirkung auf einem Dampftunnel/Gasofen fixiert und dann in mundgerechte Chunks C erschnitten.

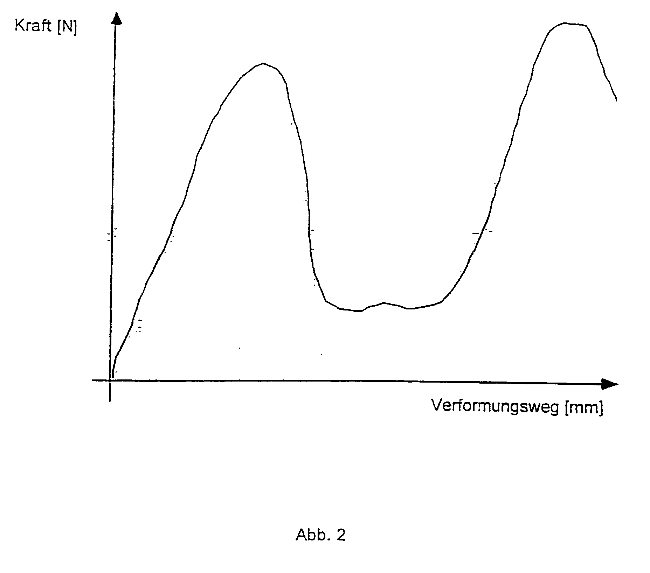

Abbildung 2 ist die Darstellung der zum Aufbrechen der beiden Phasen benötigten Kraft in einem aus zwei Phasen bestehenden Chunk. Die Verformung erfolgt über einen Mörser oder Kolben, und es ist die Kraft in Newton in Abhängigkeit von dem Verformungsweg in mm dargestellt. Deutlich erkennbar ist die den beiden unterschiedlichen Phasenfestigkeiten entsprechende zweistufige Verformung des Chunks.

Die in der Beschreibung, den Ansprüchen, den Tabellen sowie den Abbildungen dargelegten Merkmale der Erfindung können sowohl einzeln als auch in beliebiger Kombination für die Verwirklichung der Erfindung in ihren verschiedenen Ausführungsformen wesentlich sein.

## Patentansprüche

1. Stückiges Produkt, das sich zum Beimengen in oder als alleiniger Bestandteil von Tiernahrungsmittelzusammensetzungen eignet und das Proteine, eine oder mehrere wasserbindende Komponenten, Wasser und Salz enthält, **dadurch gekennzeichnet, daß** es aus mindestens einer Phase besteht, in der die Proteine als Ergebnis eines geeigneten-Denaturierungsschrittes eine sich durch hohe Festigkeit auszeichnende Matrix bilden, welche Prozesse wie Sterilisierung und mehrjähriges Aufbewahren ohne merkliche Festigkeitseinbußen übersteht, weiterhin **dadurch gekennzeichnet, daß** die Proteine aus konzentriertem Blutplasma und/oder Blutplasmapulver und/oder Ei-Albumin-Pulver und/oder Weizenkleber und/oder Sojaproteinen stammen, daß die wasserbindenden Komponenten entweder aus der Gruppe Mehl/Stärke/Wachsmaisstärke oder aus der Gruppe Kieselsäure/physiologisch unbedenkliche Metalloxide/andere nicht-toxische, inerte, wasserabsorbierende Substanzen oder aus der Gruppe Cellulose-Pulver/Pflanzenfasern oder aus einer Kombination von Substanzen der verschiedenen Gruppen stammen, und daß allein durch die Auswahl der Art und Menge der Proteine und der wasserbindenden Komponenten die Textur des stückigen Produktes festgelegt ist, **dadurch gekennzeichnet, daß** nach seiner Herstellung der Gehalt an Proteinen 10 bis 35 Gew.-%, an Mehl/Stärke/Wachsmaisstärke 15 bis 40 Gew.-% und an Kieselsäuren/physiologisch unbedenklichen Metalloxiden/anderen nicht-toxischen, inerten, wasserabsorbierenden Substanzen bzw. Cellulosepulver/Pflanzenfasern 5 bis 25 Gew.-% beträgt.

2. Stückiges Produkt nach Anspruch 1, **dadurch gekennzeichnet, daß** die feste Phase einen Fett-/Ölanteil aufweist, der unter 5 % liegt.

3. Stückiges Produkt nach Anspruch 2, **dadurch gekennzeichnet, daß** die feste Phase einen Fett-/Ölanteil aufweist, der unter 2 % liegt.

4. Stückiges Produkt nach einem der Ansprüche 1 bis 3, **dadurch gekennzeichnet, daß** zu seiner Herstellung das Gewichtsverhältnis der proteinhaltigen Zutaten zu den wasserbindenden Komponenten im Bereich von 2,5:1 bis 0,3:1 liegt.

5. Stückiges Produkt nach einem der vorangegangen Ansprüche, **dadurch gekennzeichnet, daß** nach seiner Herstellung das Verhältnis von Proteinen zu Mehl zwischen 0,6 und 1,4 liegt.

6. Stückiges Produkt nach Anspruch 5, **dadurch gekennzeichnet, daß** nach seiner Herstellung der Feuchtigkeitsgehalt zwischen 35 und 65 %, der Kohlenhydratgehalt zwischen 10 und 30 % und der Fettanteil unter 5 % liegt.

7. Stückiges Produkt nach einem der Ansprüche 5 bis 6, **dadurch gekennzeichnet, daß** nach seiner Herstellung der Fettanteil unter 2 % liegt.

8. Stückiges Produkt nach einem der vorangegangenen Ansprüche, **dadurch gekennzeichnet, daß** es aus einer inneren und einer äußeren Phase besteht, wobei die äußere Phase eine Zusammensetzung nach den Ansprüchen 1 bis 7 hat und mindestens 10 x, vorzugsweise 18 x verformungsresistenter als die innere Phase ist.

9. Stückiges Produkt nach Anspruch 8, **dadurch gekennzeichnet, daß** die innere Phase eine aus gekochten oder ungekochten Fleischteilen bestehende Phase ist.

10. Stückiges Produkt nach einem der Ansprüche 1 bis 7, **dadurch gekennzeichnet, daß** es aus einer inneren und einer äußeren Phase besteht, wobei die innere Phase eine Zusammensetzung nach einem der Ansprüche 1 bis 7 hat und mindestens 10 x, vorzugsweise 18 x verformungsresistenter als die äußere Phase ist.

11. Stückiges Produkt nach Anspruch 10, **dadurch gekennzeichnet, daß** die äußere Phase eine Emulsion oder ein Gel ist oder eine weiche, leicht verformbare Konsistenz hat.

12. Verfahren zur Herstellung eines stückigen Produktes nach einem der vorangegangenen Ansprüche, **dadurch gekennzeichnet, daß** zur Herstellung der sich durch hohe Festigkeit auszeichnenden Phase die Proteine in Wasser gelöst werden, sodann wasserbindende Substanzen in die Proteinlösung dispergiert werden, sodann die Viskosität der so erhaltenen Suspension durch geeignete Zugabe quellfähiger oder wasserabsorbierender Substanzen eingestellt wird, die so erhaltene Phase zu Strängen einer definierten Größe ausgeformt wird, die so erhaltenen Stränge einem Denaturierungsschritt unterworfen und dann auf eine geeignete Größe geschnitten und allein oder eventuell mit anderen Komponenten verpackt und sterilisiert werden, und weiterhin **dadurch gekennzeichnet, daß** die Textur des stückigen Produktes allein durch die Auswahl der Art und Menge der Proteine und der wasserbindenden Komponente festgelegt wird.

13. Verfahren nach Anspruch 12, **dadurch gekennzeichnet, daß** die Proteine unter Salzzugabe in Wasser gelöst werden.

14. Verfahren nach einem der Ansprüche 12-13, **dadurch gekennzeichnet, daß** die wasserbindenden Substanzen, welche in die Protein-/Salzlösung dispergiert werden, der Gruppe Mehl/Stärke/Wachsmaisstärke angehören.

15. Verfahren nach einem der Ansprüche 12-14, **dadurch gekennzeichnet, daß** zum Einstellen der Viskosität der Suspension eine oder mehrere Substanzen der Gruppe Mehl/Kieselsäure/physiologisch unbedenkliche Metalloxide/andere nicht-toxische, inerte, wasserabsorbierende Substanzen/Cellulosepulver/Pflanzenfasern verwendet werden:

16. Verfahren nach einem der Ansprüche 12-15, **dadurch gekennzeichnet, daß** die ausgeformten Stränge einen mittleren Durchmesser von 10 mm bis 35 mm haben.

17. Verfahren nach einem der Ansprüche 12-16, **dadurch gekennzeichnet, daß** der Denaturierungsschritt eine Temperaturänderung oder eine Änderung des pH-Wertes beinhaltet.

18. Verfahren nach Anspruch 17, **dadurch gekennzeichnet, daß** zur Durchführung des Denaturierungsschrittes die Temperatur auf mindestens 85°C erhöht wird.

19. Verfahren nach einem der Ansprüche 12-18, **dadurch gekennzeichnet, daß** die nach dem Schneideschritt erhaltenen Stücke eine zum Verzehr geeignete Größe aufweisen.

## Claims

1. Chunky product, which is suitable for adding to, or as the sole ingredient of, animal food compositions and which contains proteins, one or more water-binding components, water and salt, **characterised in that** it consists of at least one phase in which the proteins form a matrix which, as the result of a suitable denaturation step, is distinguished by high stability and which withstands processes such as sterilisation and storage over a number of years without noticeable loss of stability, also **characterised in that** the proteins are derived from concentrated blood plasma and/or blood plasma powder and/or ovalbumin powder and/or gluten and/or soy bean proteins, **in that** the water-binding components are derived either from the group comprising flour/starch/waxy maize starch or from the group comprising silicic acid/physiologically acceptable metal oxides/other non-toxic, inert, water-absorbing substances or from the group comprising cellulose powder/plant fibres or from a combination of substances from the various groups, and **in that** the texture of the chunky product is fixed solely by the choice of the type and amount of the proteins and of the water-binding components, **characterised in that**, after its manufacture, the protein content is 10 to 35% by weight, the content of flour/starch/waxy maize starch is 15 to 40% by weight and the content of silicic acids/physiologically acceptable metal oxides/other non-toxic, inert, water-absorbing substances or cellulose powder/plant fibres is 5 to 25% by weight.

2. Chunky product according to claim 1, **characterised in that** the solid phase has a proportion of fat/oil which is less than 5%.

3. Chunky product according to claim 2, **characterised in that** the solid phase has a proportion of fat/oil which is less than 2%.

4. Chunky product according to one of claims 1 to 3, **characterised in that**, for its manufacture, the weight ratio of the protein-containing ingredients to the water-binding components lies in the range between 2.5:1 and 0.3:1.

5. Chunky product according to one of the preceding claims, **characterised in that**, after its manufacture, the ratio of proteins to flour is between 0.6 and 1.4.

6. Chunky product according to claim 5, **characterised in that**, after its manufacture, the moisture content is between 35 and 65%, the carbohydrate content is between 10 and 30% and the proportion of fat is less than 5%.

7. Chunky product according to one of claims 5 to 6, **characterised in that**, after its manufacture, the proportion of fat is less than 2%.

8. Chunky product according to one of the preceding claims, **characterised in that** it comprises an inner and an outer phase, the outer phase having a composition according to claims 1 to 7 and being at least 10 x, preferably 18 x more deformation-resistant than the inner phase.

9. Chunky product according to claim 8, **characterised in that** the inner phase is a phase comprising cooked or uncooked pieces of meat.

10. Chunky product according to one of claims 1 to 7, **characterised in that** it comprises an inner and an outer phase, the inner phase having a composition according to one of claims 1 to 7 and being at least 10 x, preferably 18 x more deformation-resistant than the outer phase.

11. Chunky product according to claim 10, **characterised in that** the outer phase is an emulsion or a gel or has a soft, easily deformable consistency.

12. Method for manufacturing a chunky product according to one of the preceding claims, **characterised in that**, for producing the phase which is distinguished by high stability, the proteins are dissolved in water, then water-binding substances are dispersed into the protein solution, then the viscosity of the suspension thus obtained is adjusted by the appropriate addition of swelling or water-absorbing substances, the phase thus obtained is shaped into strands of a defined size, the strands thus obtained are subjected to a denaturation step and then cut to an appropriate size and packaged and sterilised on their own or possibly with other components, and also **characterised in that** the texture of the chunky product is fixed solely by the choice of the type and amount of the proteins and of the water-binding components.

13. Method according to claim 12, **characterised in that** the proteins are dissolved in water with the addition of salt.

14. Method according to one of claims 12-13, **characterised in that** the water-binding substances, which are dispersed into the protein/salt solution, belong to the group comprising flour/starch/waxy maize starch.

15. Method according to one of claims 12-14, **characterised in that** one or more substances of the group comprising flour/silicic acid/physiologically acceptable metal oxides/other non-toxic, inert, water-absorbing substances/cellulose powder/plant fibres are used to adjust the viscosity of the suspension.

16. Method according to one of claims 12-15, **characterised in that** the shaped strands have a mean diameter of 10 mm to 35 mm.

17. Method according to one of claims 12-16, **characterised in that** the denaturation step includes a temperature change or an alteration of the pH value.

18. Method according to claim 17, **characterised in that** the temperature is raised to at least 85°C to carry out the denaturation step.

19. Method according to one of claims 12-18, **characterised in that** the chunks obtained after the cutting step are of a suitable size for eating.

## Revendications

1. Produit en morceaux, approprié à l'addition ou en tant qu'unique ingrédient des compositions d'aliments pour animaux et comprenant des protéines, un ou plusieurs composants liant l'eau, de l'eau et du sel, **caractérisé en ce qu'**il se compose d'au moins une phase dans laquelle les protéines forment, comme résultat d'une étape de dénaturation appropriée, une matrice **se caractérisant par** une résistance élevée et qui résiste à des procédés tels que la stérilisation et la conservation pluriannuelle sans perte de résistance remarquable, en outre **caractérisé en ce que** les protéines proviennent de plasma sanguin concentré et/ou de poudre de plasma sanguin et/ou de poudre d'albumine d'oeuf et/ou de colle céréalière et/ou de protéines de soja, **en ce que** les composants liant l'eau proviennent soit du groupe des farine/amidon/amidon de mais cireux, soit du groupe acide silicique/ oxydes métalliques physiologiquement acceptables/autres substances inertes, non toxiques et absorbant l'eau, soit du groupe poudre cellulosique/fibres végétales, soit d'une combinaison de substances des différents groupes, et **en ce que** la texture du produit en morceaux est déterminée uniquement par la sélection du type et de la quantité des protéines et des composants liant l'eau, **caractérisé en ce que**, après sa fabrication, la teneur en protéines est de 10 à 35 % en poids de protéines, en farine/amidon/amidon de maïs cireux de 15 à 40 % en poids, en acides siliciques/oxydes métalliques physiologiquement acceptables/autres substances non toxiques, inertes, absorbant l'eau ou en poudre cellulosique/fibres végétales de 5 à 25 % en poids.

2. Produit en morceaux selon la revendication 1, **caractérisé en ce que** la phase solide présente une proportion graisse/huile qui se situe en dessous de 5 %.

3. Produit en morceaux selon la revendication 2, **caractérisé en ce que** la phase solide présente une proportion graisse/huile qui se situe en dessous de 2 %.

4. Produit en morceaux selon l'une des revendications 1 à 3, **caractérisé en ce que**, pour sa production, le rapport en poids des additifs contenant des protéines/composants liants se situe dans la plage allant de 2,5/1 à 0,3/1.

5. Produit en morceaux selon l'une des revendications précédentes, **caractérisé en ce que**, après sa production, le rapport protéines/farine se situe entre 0,6 et 1,4.

6. Produit en morceaux selon la revendication 5, **caractérisé en ce que**, après sa production, la teneur en humidité se situe entre 35 et 65 %, la teneur en hydrates de carbone entre 10 et 30 % et la proportion de graisse en dessous de 5 %.

7. Produit en morceaux selon l'une des revendications 5 à 6, **caractérisé en ce que**, après sa production, la proportion de graisse se situe en dessous de 2 %.

8. Produit en morceaux selon l'une des revendications précédentes, **caractérisé en ce qu'**il se compose d'une phase interne et d'une phase externe, la phase externe ayant une composition selon les revendications 1 à 7 et étant 10 fois, de préférence 18 fois plus résistante à la déformation que la phase interne.

9. Produit en morceaux selon la revendication 8, **caractérisé en ce que** la phase interne est une phase constituée de pièces de viande cuites et non cuites.

10. Produit en morceaux selon l'une des revendications 1 à 7, **caractérisé en ce qu'**il se compose d'une phase interne et d'une phase externe, la phase interne ayant une composition selon l'une des revendications 1 à 7 et étant 10 fois, de préférence 18 fois plus résistante à la déformation que la phase externe.

11. Produit en morceaux selon la revendication 10, **caractérisé en ce que** la phase externe est une émulsion ou un gel ou a une consistance souple, facilement déformable.

12. Procédé de production d'un produit en morceaux selon l'une des revendications précédentes, **caractérisé en ce que**, pour la production de la phase **se caractérisant par** une résistance élevée, les protéines sont dissoutes dans l'eau, ensuite les substances liant l'eau sont dispersées dans la solution protéinée, puis la viscosité de la suspension ainsi obtenue est réglée par addition appropriée de substances gonflantes ou absorbant l'eau, la phase ainsi obtenue est formée en brins d'une taille définie, les brins ainsi obtenus sont soumis à une étape de dénaturation et ensuite coupés à une taille adéquate et emballés seuls, ou le cas échéant, avec d'antres composants et stérilisés, et **caractérisé en outre en ce que** la texture du produit en morceaux est déterminée uniquement par la sélection du type et de la quantité des protéines et des composants liant l'eau.

13. Procédé selon la revendication 12, **caractérisé en ce que** les protéines sont dissoutes dans l'eau en ajoutant du sel.

14. Procédé selon l'une des revendications 12 à 13, **caractérisé en ce que** les substances liant l'eau, dispersées dans la solution protéine/ sel, appartiennent au groupe farine/ amidon/amidon de maïs cireux.

15. Procédé selon l'une des revendications 12 à 14, **caractérisé en ce que**, pour régler la viscosité de la suspension, on utilise une ou plusieurs substances du groupe farine/acide silicique/oxydes métalliques physiologiquement acceptables/autres substances non toxiques, inertes, absorbant l'eau/poudre de cellulose/fibres végétales.

16. Procédé selon l'une des revendications 12 à 15, **caractérisé en ce que** les brins formés ont un diamètre moyen de 10 mm à 35 mm.

17. Procédé selon l'une des revendications 12 à 16, **caractérisé en ce que** l'étape de dénaturation comporte une modification de température ou une modification du pH.

18. Procédé selon la revendication 17, **caractérisé en ce que**, pour réaliser l'étape de dénaturation, la température est portée à au moins 85°C.

19. Procédé selon l'une des revendications 12 à 18, **caractérisé en ce que** les morceaux obtenus après l'étape de coupe présentent une taille appropriée à la consommation.
